# EUROPÄISCHE PATENTSCHRIFT

(11) **EP 3 096 025 B1**
(45) Veröffentlichungstag und Bekanntmachung des Hinweises auf die Patenterteilung: **09.10.2024**
(21) Anmeldenummer: 16169029.2
(22) Anmeldetag: 10.05.2016
(51) Int. Cl.: F16B 21/07, F16B 21/09

(54) **KUPPLUNG BESTEHEND AUS KUPPLUNGSBOLZEN UND HALTER SOWIE EIN VERFAHREN ZUM VERBINDEN EINES ERSTEN UND ZWEITEN BAUTEILS MITHILFE DER KUPPLUNG**
COUPLING CONSISTING OF COUPLING PIN AND HOLDER, AND METHOD FOR JOINING A FIRST AND SECOND COMPONENT USING THE COUPLING
COUPLAGE COMPRENANT DES TIGES DE COUPLAGE ET DISPOSITIFS DE RETENUE ET PROCEDE DE LIAISON D'UN PREMIER ET D'UN SECOND COMPOSANT A L'AIDE DU COUPLAGE

(30) Priorität: 20.05.2015 DE 102015108007
(43) Veröffentlichungstag der Anmeldung: 23.11.2016
(73) Patentinhaber: Böllhoff Verbindungstechnik GmbH, 33649 Bielefeld (DE)
(72) Erfinder: Heimann, Vanessa, 33098 Paderborn (DE); Vorderwisch, Alexander, 33613 Bielefeld (DE)
(74) Vertreter: HWP Intellectual Property

(56) Entgegenhaltungen:
- EP-B1- 1 416 172
- CN-A- 1 667 283
- DE-A1- 1 807 371
- DE-A1- 102010 000 260

## Beschreibung

### 1. Gebiet der Erfindung

Die vorliegende Erfindung betrifft eine Kupplung, mit der ein erstes und ein zweites Bauteil miteinander verbindbar sind. Des Weiteren betrifft vorliegende Erfindung einen Kupplungsbolzen und einen Halter, die in ihrer Zusammenwirkung oben genannte Kupplung bilden. Zudem ist vorliegende Erfindung auf ein Verfahren zum Verbinden eines ersten und eines zweiten Bauteils mithilfe dieser formschlüssig arbeitenden Kupplung gerichtet.

### 2. Hintergrund der Erfindung

Im Stand der Technik sind verschiedene Steckkupplungen bekannt, die sich aus einem Kupplungselement und einem Kugelbolzen zusammensetzen. Das Kupplungselement weist eine Kugelpfanne auf, in die der Kugelkopf des Kugelbolzens einschnappt. Auf diese Weise wird eine Verbindung zwischen Kupplungselement und Kugelbolzen hergestellt. Da das Kupplungselement häufig aus elastomerem, also elastischem, Material besteht und/oder die Kugelpfanne in einem gewissen Grad bewegbar im Kupplungselement angeordnet ist, können mit diesen Steckkupplungen Schwingungen der Bauteile gedämpft werden.

EP 1 416 172 B1 beschreibt eine derartige Konstruktion einer Steckkupplung, die die Dämpfung von Bauteilschwingungen unterstützt. Zu diesem Zweck ist die den Kugelkopf aufnehmende Kugelpfanne an einem umfänglich angeordneten wellenförmigen Steg befestigt. Diese Wellenform des Stegs ermöglicht eine Bewegung der Kugelpfanne in beliebige Raumrichtungen, sodass Bewegungen zwischen den Bauteilen gedämpft werden.

Diese schwingungsdämpfenden Kupplungen haben aber den Nachteil, dass aufgrund der dämpfenden Materialeigenschaften von Kupplungselement und/oder Kugelbolzen die Haltekräfte zwischen Kupplungselement und Kugelbolzen limitiert sind. Aus diesem Grund sind derartige Steckkupplungen beispielsweise für mechanisch hochbelastete Verbindungen nicht geeignet. Dazu zählen u.a. großvolumige Verbrennungsmotoren oder Elektromotoren, für deren mechanische Schwingungen oder allgemein für deren mechanische Belastungen die Lösekräfte zwischen Kugelkopf und Kugelpfanne des Kupplungselements zu gering wären. Daraus folgt der Nachteil, dass beispielsweise Abdeckungen oder Verkleidungen im Motorraum aufgrund der dort vorhandenen Vibrationen aus ihrer Steckverbindung gelöst werden können.

Um die Haltekräfte zwischen Kupplungselement und Kugelbolzen zu steigern, d.h. höhere Ausziehkräfte zu realisieren, beschreibt DE 10 2013 102 197 A1 eine andere Kupplungskonstruktion. Der hier verwendete Kugelbolzen greift in die Konstruktion eines Kupplungselements ein, deren einzelne Haltestege entgegen einer Einsetzrichtung des Kugelbolzens in die Kugelpfanne geneigt sind. Aufgrund der Neigung dieser Stege und aufgrund des Angriffspunkts der einzelnen Stege am Kugelkopf verhindern die Stege ein Herauslösen des Kugelkopfs aus der Kugelpfanne mit geringen Ausziehkräften. Denn während einer Auszugsbewegung werden die Stege gestaucht und/oder in Richtung der Einsetzöffnung des Kupplungselements bewegt. Aufgrund dieser Schwenkbewegung der Stege wird die Öffnung des Kupplungselements teilweise blockiert, was ein Herauslösen des Kugelkopfs verhindert. Trotz der hohen Auszugskräfte dieser Kupplung ist es von Nachteil, dass die Verbindung zwischen Kupplungselement und Kugelkopf nicht zerstörungsfrei gelöst werden kann. Somit werden beispielsweise Verkleidungen im Motorbereich zwar verlässlich gehalten, aber jedes Entfernen eines Verkleidungsteils zerstört das Kupplungselement. Aus diesem Grund muss jedes Mal das Kupplungselement ersetzt werden, was zusätzlichen Arbeits- und Kostenauf wand mit sich bringt.

Eine Steckhalterung für einen oberen Befestigungspunkt eines hängend montierbaren Bauteils ist in DE 10 2010 000 260 A1 beschrieben. Die Steckhalterung umfasst ein Gehäuse mit einer Öffnung, die eine Mittelachse hat, und einen Haltebolzen des Bauteils mit einem mit einer Nut versehenen Ende, das in das Gehäuse einführbar und darin lösbar verriegelbar ist. Die Öffnung ist schräg in dem Gehäuse unter einem spitzen Winkel gegen die Senkrechte angeordnet. Zu Montage des Bauteils ist der Haltebolzen entweder in der Mittelachse oder in der Senkrechten in die Öffnung einführbar und dann durch Einrasten eines als ein Federelement ausgebildeten Anteils der Öffnung in die Nut verriegelbar. Zur Demontage des Bauteils wird der Haltebolzen um den Randteil in die Mittelachse geschwenkt und dadurch entriegelt und kann dann aus der Öffnung herausgezogen werden.

Es ist daher die Aufgabe vorliegender Erfindung, eine zum Stand der Technik alternative Kupplung bereitzustellen, die ausreichend hohe Lösekräfte realisiert und damit mechanisch belastbar ist. Gleichzeitig soll die Kupplung aber auch zerstörungsfrei lösbar sein, um gerade bei Wartungsarbeiten die erforderliche Flexibilität zu gewährleisten.

### 3. Zusammenfassung der Erfindung

Die obige Aufgabe wird durch einen Halter für einer Kupplung gemäß dem unabhängigen Patentanspruch 1, eine Kupplung, mit der ein erstes und ein zweites Bauteil miteinander verbindbar sind, gemäß dem abhängigen Patentanspruch 3 sowie durch ein Verfahren zum Verbinden eines ersten und eines zweiten Bauteils mithilfe der Kupplung gemäß dem unabhängigen Patentanspruch 12 gelöst. Vorteilhafte Ausgestaltungen und Weiterentwicklungen vorliegender Erfindung gehen aus der folgenden Beschreibung, den begleitenden Zeichnungen und den anhängenden Ansprüchen hervor.

Die erfindungsgemäße Kupplung, mit der ein erstes und ein zweites Bauteil miteinander verbindbar sind, weist die folgenden Merkmale auf einen Kupplungsbolzen, der ein Befestigungsende, einen Haltekopf und einen dazwischen angeordneten Stützabschnitt umfasst, in der der Haltekopf und der Stützabschnitt über einen gegenüber dem Haltekopf verjüngten Steg miteinander verbunden sind und in der das Befestigungsende am ersten Bauteil befestigbar ist, einen Halter mit einem Schlüsselloch und einem Anlagebereich, in dem ein Rand des Schlüssellochs eine nicht-ebene Fläche einschließt, der Kupplungsbolzen über eine Steck-Schwenk-Bewegung in dem Schlüsselloch formschlüssig verriegelbar ist und der Halter über eine Befestigungsstruktur an dem zweiten Bauteil befestigbar ist.

Die Verbindung zwischen Kupplungsbolzen und Halter wird nicht allein durch eine geradlinige Steckbewegung hergestellt. Vielmehr findet hier eine Kombination einer linearen und einer Schwenkbewegung statt, um eine formschlüssige Verbindung zwischen dem Kupplungsbolzen und dem Schlüsselloch des Halters herzustellen. Zu diesem Zweck weist der Kupplungsbolzen einen Haltekopf auf, der sich im Schlüsselloch verriegelt, vorzugsweise nachdem die Schwenkbewegung abgeschlossen ist. Der ebenfalls im Kugelbolzen vorgesehene Stützabschnitt liegt bevorzugt zumindest teilweise an dem Halter an, sobald der Haltekopf im Schlüsselloch eingesetzt und/oder nachdem er in diesem verriegelt worden ist. Damit werden mechanische Belastungen zwischen dem Stützabschnitt des Kupplungsbolzens und dem Anlagebereich des Halters und daher zwischen den Bauteilen übertragen. Der Anlagebereich erstreckt sich nämlich in der Umgebung des Schlüssellochs, sodass die Verriegelung des Haltekopfs im Schlüsselloch den Stützabschnitt zur Anlage im Anlagebereich bringt. Die formschlüssige Verbindung zwischen Schlüsselloch und Haltekopf und somit zwischen Halter und Kupplungsbolzen widersteht maximalen Auszugskräften. Denn diese maximalen Auszugskräfte aus dem Schlüsselloch sind durch die Materialstabilität des Halters und/oder des Kupplungsbolzens bestimmt, da nur ein den Halter oder den Kupplungsbolzen zerstörendes Ausziehen möglich wäre. Da der Kupplungsbolzen über sein Befestigungsende mit dem ersten Bauteil verbunden ist und der Halter über seine Befestigungsstruktur am zweiten Bauteil befestigt ist, wird durch die Verbindung zwischen Kupplungsbolzen und Halter gleichzeitig eine verlässliche Verbindung zwischen erstem und zweitem Bauteil realisiert.

Gemäß einer bevorzugten Ausführungsform vorliegender Erfindung umfasst das Schlüsselloch einen Einsetzabschnitt und eine Verriegelungsnut, in der der Einsetzabschnitt einen Durchgangsbereich für den Haltekopf des Kupplungsbolzens bildet, und eine Breite der Verriegelungsnut geringer ist als ein Durchmesser des Haltekopfs und größer als eine Dicke des verjüngten Stegs.

Das bereits oben beschriebene Schlüsselloch schließt mit seinem Rand eine nicht-ebene Fläche ein. Das bedeutet, dass das Schlüsselloch in einem Flächenbereich des Halters angeordnet ist, der nicht in einer Ebene liegt. Ein derartiger Flächenbereich wird beispielsweise durch eine Mantelfläche eines Kugelsegments, eine Kugelpfanne, eine konische Mantelfläche oder durch eine beliebig krummlinig gewölbte Mantelfläche gebildet. Das aus dieser Mantelfläche ausgeschnittene Schlüsselloch setzt sich aus dem beliebig geformten Einsetzabschnitt und der sich daran anschließenden Verriegelungsnut zusammen. Der Einsetzabschnitt muss eine ausreichende Ausdehnung haben, damit der Haltekopf durch diesen Einsetzabschnitt hindurchgeführt werden kann. Andererseits muss der Einsetzabschnitt ausreichend schmal sein, damit der Stützabschnitt gerade nicht den Einsetzabschnitt durchlaufen kann.

Vorteilhafterweise sind der Haltekopf und der Stützabschnitt durch den verjüngten Steg voneinander beabstandet, dessen Breite an die Breite der Verriegelungsnut angepasst ist. Da die Verriegelungsnut gerade ausreichend breit ist, um den verjüngten Steg aufnehmen zu können, wird der Kupplungsbolzen in der Verriegelungsnut gehalten. Denn der Haltekopf und der Stützabschnitt sind jeweils in ihrer lateralen Ausdehnung breiter als die Breite der Verriegelungsnut, sodass der Kupplungsbolzen und im Speziellen der verjüngte Steg nur noch durch eine Bewegung entgegen der Einsetzrichtung aus der Verriegelungsnut gelöst werden kann. Aufgrund dieser Größenverhältnisse von Haltekopf, verjüngtem Steg und Stützabschnitt im Vergleich zur Verriegelungsnut und zum Einsetzabschnitt ergibt sich eine formschlüssige Verbindung zwischen dem Kupplungsbolzen und dem Halter. Diese formschlüssige Verbindung ist durch wirkende mechanische Kräfte nur dann lösbar, wenn das Material des Kupplungsbolzens und/oder des Halters versagt. Dementsprechend sorgt eine gezielte Materialwahl für Kupplungsbolzen und Halter vorzugsweise für die gewünschte Stabilität der Kupplung und somit der Verbindung zwischen dem ersten und dem zweiten Bauteil. In diesem Zusammenhang besteht der Kupplungsbolzen vorzugsweise aus Metall, während der Halter ebenfalls aus Metall oder aus einem geeigneten Kunststoff mit einer passenden Shore-Härte und geringer Elastizität aufgebaut ist. In gleicher Weise sind auch andere Materialien oder Materialkombinationen einsetzbar, sofern damit die gewünschte Stabilität erzielt wird.

Gemäß einer weiteren bevorzugten Ausführungsform vorliegender Erfindung ist der Anlagebereich des Halters an die Form des Stützabschnitts des Kupplungsbolzens angepasst, sodass sich der Kupplungsbolzen und der Halter im verriegelten Zustand zumindest teilweise aneinander abstützen. Erfindungsgemäß bevorzugt weist der Anlagebereich die Form einer Kugelpfanne auf, in deren Mantelfläche das Schlüsselloch ausgebildet ist.

Sofern mechanische Belastungen an erstem und/oder zweitem Bauteil auftreten, werden diese über die Kupplung zwischen den beiden Bauteilen übertragen. Da der Stützabschnitt des Kupplungsbolzens am Anlagebereich des Halters zumindest teilweise anliegt, erfolgt die Übertragung mechanischer Lasten, wie beispielsweise Bauteilschwingungen, über den Bereich der aneinander anliegenden Flächen von Anlagebereich und Stützabschnitt. Um dabei die mechanische Belastung von Halter und Kupplungsbolzen möglichst gering zu halten, ist eine große Kontaktfläche zwischen Anlagebereich und Stützabschnitt bevorzugt. Diese wird gemäß einer bevorzugten Ausführungsform vorliegender Erfindung dadurch realisiert, dass der Anlagebereich komplementär zum Stützabschnitt des Kupplungsbolzens ausgebildet ist. Eine bevorzugte Ausführungsform des Stützabschnitts nutzt eine zwischen dem Befestigungsende und dem Haltekopf angeordnete Kugel, die in einen zumindest teilweise oder vollständig als Kugelpfanne ausgeformten Anlagebereich des Halters eingreift. Es ist ebenfalls bevorzugt, andere aneinander angepasste Formgebungen für Stützabschnitt und Anlagebereich zu nutzen, wie beispielsweise eine konische oder zylindrische Form des Stützabschnitts und einen entsprechend komplementär dazu ausgebildeten Anlagebereich. Es ist weiterhin bevorzugt, einen konisch geformten Anlagebereich mit einem kugelförmigen Stützabschnitt zu kombinieren.

Gemäß einer weiteren bevorzugten Ausführungsform vorliegender Erfindung weist der Halter seitlich angeordnete Befestigungsstege auf, mit denen der Halter am zweiten Bauteil befestigbar, vorzugsweise verrastbar oder klemmbar, ist. Alternativ dazu sind am Halter vorzugsweise seitliche Stege angeordnet, die in entsprechenden Nuten am zweiten Bauteil aufnehmbar sind. Diese Stege werden in diese Nuten eingeklemmt, verklebt oder anderweitig verlässlich befestigt.

Weiterhin bevorzugt ist der Stützabschnitt des Kugelbolzens kugelförmig ausgebildet, wie es oben bereits diskutiert worden ist. Der Haltekopf bildet vorzugsweise mit dem verjüngten Steg eine pilzförmige Struktur, die das Verriegeln des Kupplungsbolzens in der Verriegelungsnut unterstützt.

Gemäß der Erfindung ist der Anlagebereich der Kupplung bezogen auf eine Längsachse eines im Schlüsselloch verriegelt anordenbaren Kupplungsbolzens zumindest zweistufig ausgebildet, sodass der Anlagebereich zwischen dem Haltekopf und dem Stützabschnitt des Kupplungsbolzens mechanisch verspannbar ist.

Im Kupplungsbolzen bilden der Haltekopf und der mit ihm über einen Steg verbundene Stützabschnitt jeweils einen Hinterschnitt in Längsrichtung des Kupplungsbolzens, sodass sich der Halter, insbesondere der Anlagebereich, in entgegengesetzten Richtungen am Haltekopf und dem Stützabschnitt abstützen kann. Dies eröffnet die Möglichkeit, ergänzend zur formschlüssigen Verbindung über das Schlüsselloch im Anlagebereich einen Presssitz des Anlagebereichs zwischen Haltekopf und Stützabschnitt zu realisieren. Zu diesem Zweck ist der Anlagebereich zweistufig ausgebildet. Eine erste Stufe des Anlagebereichs gewährleistet das Anliegen und Abstützen des Anlagebereichs am Stützabschnitt des Kupplungsbolzens. Eine zweite Stufe des Anlagebereichs schließt sich in axialer Richtung des verriegelt anordenbaren Kupplungsbolzens an die erste Stufe des Anlagebereichs an. So ist bevorzugt die erste Stufe des Anlagebereichs konisch ausgebildet, während die zweite Stufe des Anlagebereichs eine kugelförmige Gestalt aufweist. Es ist ebenfalls bevorzugt, beide Stufen des Anlagebereichs konisch, kugelförmig oder anderweitig auszubilden, solange das Abstützen an Haltekopf und Stützabschnitt gewährleistet ist. Die beiden Stufen des Anlagebereichs sind in ihrer Ausdehnung parallel zur Längsachse des verriegelt anordenbaren Kupplungsbolzens derart ausgebildet, dass sie nur über eine in Längsrichtung des Kupplungsbolzens stattfindende Kompression zwischen dem Haltekopf und dem Stützabschnitt in einem Presssitz anordenbar sind. Aufgrund des Presssitzes wird der Anlagebereich, der sich am Haltekopf abstützt, gegen den Stützabschnitt gedrückt. Verriegeln des Kupplungsbolzens bedeutet in diesem Zusammenhang ein Anordnen des Kupplungsbolzens am geschlossenen Ende der Verriegelungsnut.

Gemäß einer weiteren bevorzugten Ausführungsform besteht der Anlagebereich der Kupplung bzw. des Halters aus mindestens einem ersten und einem zweiten Flächensegment, die jeweils dem Stützabschnitt oder allgemein dem Kupplungsbolzen zugewandt sind und die zumindest teilweise symmetrisch um den verriegelt anordenbaren Kupplungsbolzen angeordnet sind.

Wie bereits oben angedeutet worden ist, sind die Flächensegmente vorzugsweise unterschiedlich geformt. Ihre Anlagefläche ist aber bevorzugt dem Stützabschnitt des Kupplungsbolzens zugewandt, während sich im verriegelten Zustand eine Rück- oder Seitenfläche des ersten Flächensegments am Haltekopf abstützt. Diese Art der Anordnung der Flächensegmente dient dazu, dass im komprimierten Zustand des Anlagebereichs bzw. nach Verriegeln des Kupplungsbolzens im Schlüsselloch eine möglichst große Fläche der Flächensegmente der Kupplung am Stützabschnitt anliegt. Die vorzugsweise in ihrer Symmetrie an den Kupplungsbolzen angepassten Flächensegmente gewährleisten eine gewisse Flexibilität beim Einsetzen des Kupplungsbolzens in das Schlüsselloch. Auf diese Weise ist keine genaue Vororientierung des Kupplungsbolzens bezogen auf die Flächensegmente erforderlich.

Gemäß einer weiteren bevorzugten Ausführungsform vorliegender Erfindung sind die Flächensegmente kugelförmig ausgebildet. Zudem ist bevorzugt ein Radius des ersten kugelförmigen Flächensegments kleiner als ein Radius des zweiten kugelförmigen Flächensegments. Zudem ist bevorzugt das erste kugelförmige Flächensegment angrenzend an das Schlüsselloch angeordnet.

Das zweite kugelförmige Flächensegment ist vorzugsweise in seiner Größe an den Stützabschnitt des Kupplungsbolzens angepasst. Gemäß einer Ausführungsform vorliegender Erfindung bildet das zweite kugelförmige Flächensegment eine komplementär zum kugelförmig ausgebildeten Stützabschnitt ausgebildete Kugelpfanne. Das erste kugelförmige Flächensegment sitzt hutförmig oder ähnlich einem Kragen auf dem zweiten kugelförmigen Flächensegment. Daher steht es aus der Umfangsfläche des zweiten kugelförmigen Flächensegments radial auswärts vor und bildet bevorzugt eine Ausbuchtung, in der das Schlüsselloch ausgebildet ist. Die radiale Ausdehnung der Ausbuchtung beginnend an der gedacht in Umfangsrichtung verlängerten inneren Anlagefläche des zweiten Flächensegments ist vorzugsweise größer als die Länge des verbindenden Stegs zwischen dem Haltekopf und dem Stützabschnitt. Somit ist der Kupplungsbolzen nur im Schlüsselloch verriegelbar, wenn das erste und zweite Flächensegment in Längsrichtung des Kupplungsbolzens komprimiert werden, um den Presssitz des Anlagebereichs zwischen Haltekopf und Stützabschnitt des Kupplungsbolzens zu realisieren.

Gemäß einer weiteren bevorzugten Ausführungsform vorliegender Erfindung sind das erste Flächensegment konisch oder kugelförmig und das zweite Flächensegment konisch oder kugelförmig ausgebildet, wobei bei zwei konischen Flächensegmenten ein Konuswinkel des ersten Flächensegments kleiner ist als ein Konuswinkel des zweiten Flächensegments. In Analogie zu den oben beschriebenen kugelförmig ausgebildeten Flächensegmenten sind ebenfalls konisch geformte Flächensegmente oder konisch und kugelförmig geformte Flächensegmente miteinander kombinierbar.

In diesem Zusammenhang ist zu gewährleisten, dass jeweils das erste Flächensegment, egal ob konisch oder kugelförmig ausgebildet, in seiner Größe derart an das erste Flächensegment angepasst sein muss, dass es hutartig oder kragenähnlich auf dem zweiten Flächensegment angeordnet ist. Diese Formgebung stellt sicher, dass für den Presssitz des Anlagebereichs am verriegelt angeordneten Kupplungsbolzen gerade das erste Flächensegment in axialer Richtung des Kupplungsbolzens komprimiert werden muss, um es zwischen Haltekopf und Stützabschnitt des Kupplungsbolzens anordnen zu können. Daraus folgt, dass ein Radius eines kugelförmigen ersten Flächensegments oder ein Konuswinkel eines konischen ersten Flächensegments nicht größer oder gleich einem Radius eines kugelförmigen zweiten Flächensegments oder einem Konuswinkels eines konischen zweiten Flächensegments sein darf.

Gemäß einer weiteren bevorzugten Ausführungsform vorliegender Erfindung ist das erste Flächensegment kugelförmig ausgebildet mit einem Durchmesser, der kleiner ist als ein Durchmesser des Stützabschnitts, und das zweite Flächensegment ist kegelstumpfartig geformt, sodass der Stützabschnitt durch das zweite Flächensegment tangential angreifbar ist.

Vorliegende Erfindung umfasst zudem den Kupplungsbolzen für die oben genannte Kupplung. Der Kupplungsbolzen umfasst das Befestigungsende, den Haltekopf und den dazwischen angeordneten Stützabschnitt, in den der Haltekopf und der Stützabschnitt über einen gegenüber dem Haltekopf verjüngten Steg miteinander verbunden sind und das Befestigungsende an einem Bauteil befestigbar ist. Bevorzugt ist der Stützabschnitt kugelförmig ausgebildet und der Haltekopf bildet mit dem verjüngten Steg eine pilzförmige Struktur. Die Vorteile der einzelnen Komponenten sowie ihr Zusammenwirken mit dem Halter wurden oben bereits beschrieben. Im Hinblick auf das Befestigungsende weist dieses vorzugsweise ein Gewinde, einen Schnappverschluss, einen Bajonettverschluss oder eine andere Struktur zur verlässlichen Befestigung des Kupplungsbolzens an oder in dem Bauteil auf.

Vorliegende Erfindung umfasst ebenfalls den bereits oben erwähnten Halter der Kupplung. Dieser weist ein Schlüsselloch und einen Anlagebereich auf, in dem ein Rand des Schlüssellochs eine nicht-ebene Fläche einschließt und der Halter über eine Befestigungsstruktur an einem Bauteil befestigbar ist. Ebenfalls erfindungsgemäß bevorzugt umfasst der Halter seitlich angeordnete Federstege oder Befestigungsstege, mit denen der Halter an einem Bauteil verrastbar, klemmbar oder allgemein befestigbar ist. Vorzugsweise greifen diese Befestigungsstege in konstruktiv daran angepasste Befestigungsnuten oder andere Konstruktionen ein oder an diese an, um den Halter verlässlich am Bauteil festzulegen. Des Weiteren weist der Halter die gleichen konstruktiven und funktionellen Eigenschaften auf, wie sie oben in Zusammenhang mit der Kupplung diskutiert worden sind. Entsprechend ist der Anlagebereich in Richtung einer Längsachse des im Schlüsselloch verriegelt anordenbaren Kupplungsbolzens zumindest zweistufig ausgebildet, sodass der Anlagebereich zwischen dem Haltekopf und dem Stützabschnitt des Kupplungsbolzens mechanisch verspannbar ist. Zudem besteht erfindungsgemäß bevorzugt der Anlagebereich aus mindestens einem ersten und einem zweiten Flächensegment, die symmetrisch um den im Schlüsselloch verriegelt anordenbaren Kupplungsbolzen angeordnet sind. Gemäß einer weiteren bevorzugten Ausführungsform des erfindungsgemäßen Halters sind das erste Flächensegment konisch oder kugelförmig und das zweite Flächensegment konisch oder kugelförmig ausgebildet, wobei bei zwei konischen Flächensegmenten ein Konuswinkel des ersten Flächensegments kleiner ist als ein Konuswinkel des zweiten Flächensegments. Eine weitere erfindungsgemäß bevorzugte Ausführungsform des Halters umfasst das erste Flächensegment in einer kugelförmigen Ausbildung mit einem Durchmesser, der kleiner ist als ein Durchmesser des Stützabschnitts des Kupplungsbolzens und in der das zweite Flächensegment kegelstumpfartig geformt ist und tangential am Stützabschnitt angreift.

Vorliegende Erfindung umfasst ebenfalls ein Verfahren zum Verbinden eines ersten und eines zweiten Bauteils mithilfe einer Kupplung, vorzugsweise einer formschlüssig arbeitenden Kupplung. Eine derartige Kupplung entspricht gemäß einer Ausführungsform vorliegender Erfindung der bereits oben beschriebenen Kupplung. Zur Realisierung des erfindungsgemäßen Verfahrens ist das erste Bauteil über ein Befestigungsende mit einem Kupplungsbolzen verbunden, der einen Haltekopf, einen Stützabschnitt und einen dazwischen angeordneten verjüngten Steg aufweist. Das zweite Bauteil weist einen Halter mit einem Schlüsselloch und einem Anlagebereich auf, in dem ein Rand des Schlüssellochs eine nicht-ebene Fläche einschließt. Das Verfahren zum Verbinden des ersten und des zweiten Bauteils umfasst folgende Schritte: Einstecken des Haltekopfs in einen Einsetzabschnitt des Schlüssellochs, sodass der Stützabschnitt am Halter anliegt, und Schwenken des Kupplungsbolzens relativ zum Halter, sodass der verjüngte Steg des Schlüssellochs zwischen dem Haltekopf und dem Stützabschnitt zumindest formschlüssig in einer Verriegelungsnut des Schlüssellochs angeordnet ist.

Aufgrund der Formgebung des Kupplungsbolzens und des Halters und aufgrund der Verbindung des Kupplungsbolzens mit dem ersten Bauteil und des Halters mit dem zweiten Bauteil liegt eine formschlüssige Verbindung zwischen dem ersten und dem zweiten Bauteil vor. Eine derartige formschlüssige Verbindung widersteht hohen mechanischen Belastungen, da im Wesentlichen die Materialbeschaffenheit von Kupplungsbolzen und Halter die Festigkeit der Verbindung bestimmt.

Des Weiteren ist es von Vorteil, dass die formschlüssige Verbindung nur über eine bestimmte Kombination von Bewegungen herstellbar ist. Im Speziellen wird der Kupplungsbolzen über eine geradlinige Steckbewegung und eine nachfolgende Schwenkbewegung in dem Schlüsselloch des Halters verriegelt. Ist vorzugsweise der Halter mit einer Motorabdeckung oder einem ähnlichen Teil verbunden, lässt sich dieses in einer räumlichen Schrägorientierung auf den Kupplungsbolzen aufsetzen und dann durch eine nachfolgende Schwenkbewegung am Kupplungsbolzen verriegeln. Dies eröffnet die Möglichkeit, dass eine derartige Verkleidung oder ein anderes Bauteil nur dann wieder von dem Kupplungsbolzen lösbar ist, wenn in umgekehrter Reihenfolge die oben genannten Relativbewegungen zwischen Kupplungsbolzen und Halter, d. h. die Schwenkbewegung und die geradlinige Bewegung, ausgeführt werden. Die Verbindung ist somit nicht durch ein geradliniges Herausziehen des Kupplungsbolzens aus dem Halter lösbar. Wird das zweite Bauteil nach Beendigung der Schwenkbewegung beispielsweise in einer zweiten Steckkupplung oder mithilfe eines weiteren Verbindungselements in dieser Position fixiert, dann garantiert die erfindungsgemäße Kupplung eine belastbare und verlässliche Fixierung des ersten und zweiten Bauteils aneinander.

Erfindungsgemäß bevorzugt umfasst das Verbindungsverfahren den weiteren Schritt: Federvorspannen des Stützabschnitts des Kupplungsbolzens gegen den Anlagebereich des Halters, in dem der verjüngte Steg in die Verriegelungsnut eingeschwenkt wird. Gemäß einer weiteren bevorzugten Ausführungsform des erfindungsgemäßen Verfahrens ist der Stützabschnitt kugelförmig ausgebildet. Der Stützabschnitt wird zudem in dem kugelpfannenähnlichen Anlagebereich, der vorzugsweise konisch oder kugelförmig ausgebildet ist, aufgenommen, sodass Kräfte zwischen dem Kupplungsbolzen und dem Halter flächig übertragen werden.

Des Weiteren sind im Halter die oben diskutierten ersten und zweiten Flächensegmente vorgesehen. Basierend auf der zweistufigen Formgebung des Anlagebereichs, insbesondere der Flächensegmente, wird ein Presssitz des Halters zwischen dem Haltekopf und dem Stützabschnitt des Kupplungsbolzens hergestellt.

Es ist des Weiteren bevorzugt, eine weitere Verbindung zwischen dem ersten und dem zweiten Bauteil am Ende der Schwenkbewegung herzustellen, vorzugsweise über eine Steckkupplung, wie es oben bereits erläutert worden ist.

Vorliegende Erfindung umfasst zudem ein erstes und ein zweites Bauteil, die zumindest über eine Kupplung gemäß den oben beschriebenen Ausführungsformen miteinander verbunden sind. Erfindungsgemäß bevorzugt ist das erste und zweite Bauteil zusätzlich über eine Steckkupplung miteinander verbunden.

Wie bereits im Zusammenhang mit den bevorzugten Verfahrensschritten des Verfahrens zum Verbinden des ersten und zweiten Bauteils erläutert worden ist, stellt die erfindungsgemäße Steckkupplung eine belastbare Verbindung zwischen dem ersten und zweiten Bauteil her. Die zweite Steckkupplung gewährleistet neben einem zusätzlichen mechanischen Halt der beiden Bauteile aneinander eine Sicherung, die ein Lösen der formschlüssigen Verbindung in der erfindungsgemäßen Kupplung verhindert.

### 4. Kurze Beschreibung der begleitenden Zeichnungen

Die bevorzugten Ausführungsformen vorliegender Erfindung werden unter Bezugnahme auf die begleitenden Zeichnungen näher erläutert. Es zeigen:
- Fig. 1: eine perspektivische Darstellung einer bevorzugten Ausführungsform der erfindungsgemäßen Kupplung in Verbindung mit dem zweiten Bauteil,
- Fig. 2: eine perspektivische Darstellung des Kupplungsbolzens aus Fig. 1,
- Fig. 3: eine perspektivische Darstellung des Halters aus Fig. 1,
- Fig. 4: eine perspektivische Ansicht des Halters aus Fig. 1 von unten,
- Fig. 5a - e: bevorzugte Konfigurationen des Halters in schematischer Darstellung mit und ohne Kupplungsbolzen
- Fig. 6: eine Seitenansicht des bevorzugten Kupplungsbolzens und des bevorzugten Halters vor dem Einsetzen des Kupplungsbolzens in den Halter,
- Fig. 7: eine Seitenansicht des bevorzugten Kupplungsbolzens und des bevorzugten Halters nachdem der Kupplungsbolzen in den Aufnahmebereich des Halters eingesetzt worden ist,
- Fig. 8: eine Seitenansicht des bevorzugten Kupplungsbolzens und des bevorzugten Halters nachdem der Kupplungsbolzen in der Verriegelungsnut verriegelt worden ist,
- Fig. 9: eine vergrößerte Ausschnittsdarstellung der Verbindung zwischen Kupplungsbolzen und Halter aus Fig. 7,
- Fig. 10: eine perspektivische Ansicht der bevorzugten Ausführungsform der erfindungsgemäßen Kupplung bestehend aus Kupplungsbolzen und Halter,
- Fig. 11: eine schematische Darstellung der Verwendung der erfindungsgemäßen Kupplung in Kombination mit einem ersten und einem zweiten Bauteil und
- Fig. 12: ein Flussidagramm einer bevorzugten Ausführungsform des Verbindungsverfahrens des ersten und zweiten Bauteils mithilfe der Kupplung (Fig. 12a) und eine sequentielle Darstellung des Verbindungsverfahrens mithilfe des bevorzugten Kupplungsbolzens und des bevorzugten Halters in Kombination mit dem zweiten Bauteil (Fig. 12b).

### 5. Detaillierte Beschreibung der bevorzugten Ausführungsformen

Die erfindungsgemäße Kupplung dient der Befestigung eines ersten Bauteils B1 und eines zweitens Bauteils B2 aneinander. Im weitesten Sinne handelt es sich hier um eine Steckkupplung. Während herkömmliche Steckkupplungen hauptsächlich einen Presssitz - also eine kraftschlüssige Verbindung - realisieren, nutzt vorliegende Erfindung eine formschlüssige Verbindung zur Bereitstellung einer verlässlichen Verbindung zwischen den Bauteilen B1, B2. Gemäß bevorzugter Ausführungsformen vorliegender Erfindung wird der realisierte Formschluss durch eine zusätzliche kraftschlüssige Verbindung unterstützt.

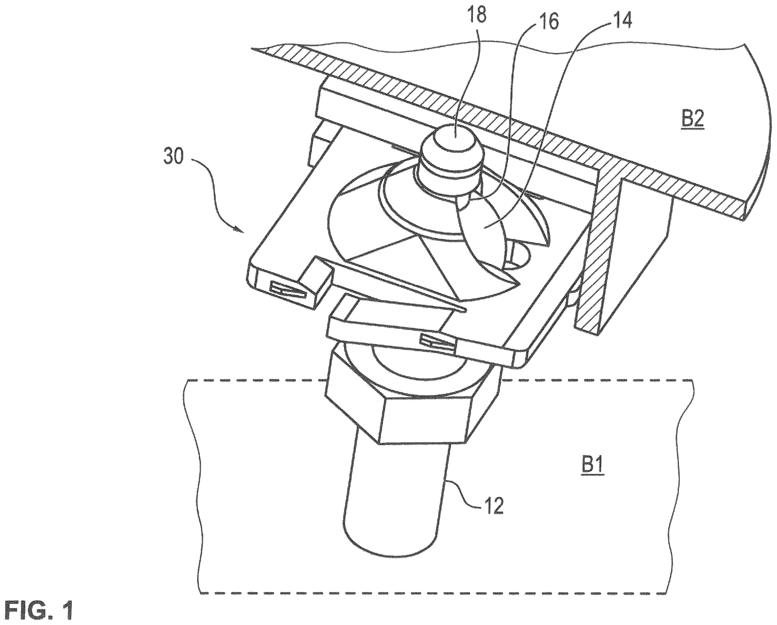

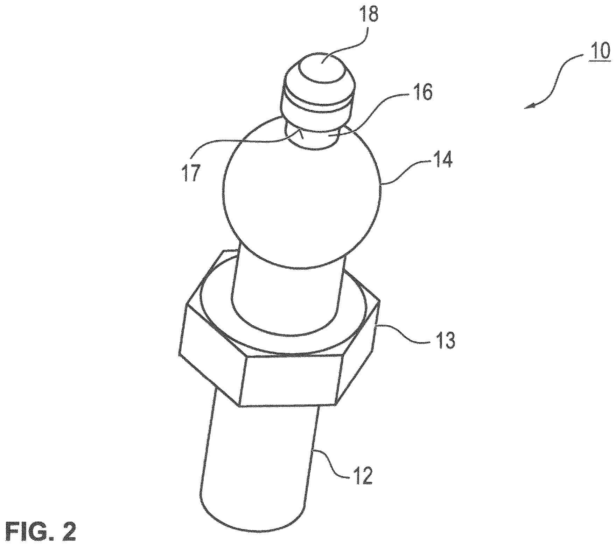

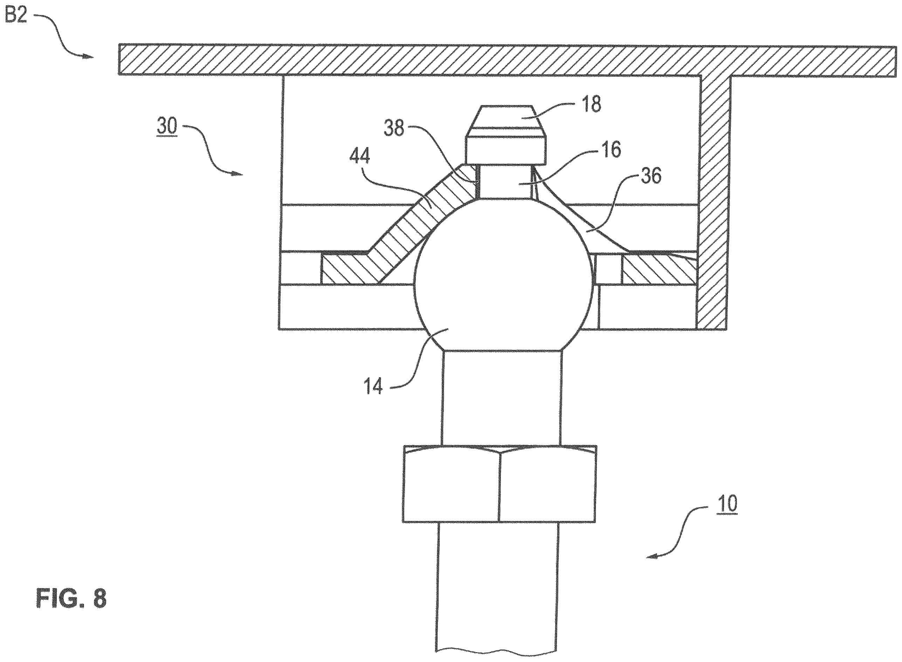

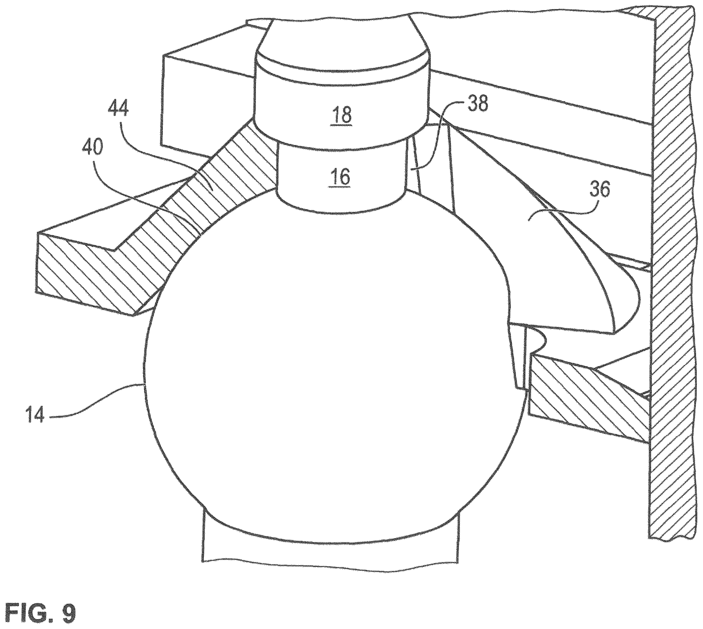

Eine perspektivische Darstellung einer bevorzugten Ausführungsform der erfindungsgemäßen Kupplung zeigen die Figuren 1 und 9. Die einzelnen Komponenten der Kupplung und ihre bevorzugte Ausgestaltung sind in den Figuren 2 bis 8 veranschaulicht.

Die Kupplung dient der bevorzugten formschlüssigen Verbindung zwischen dem ersten Bauteil B1 und dem zweiten Bauteil B2. Zur Herstellung der Verbindung wird ein Kupplungsbolzen 10 mit seinem Befestigungsende 12 im ersten Bauteil B1 befestigt. Ein Halter 30, mit dem der Kupplungsbolzen 10 verbunden wird, wird am zweiten Bauteil B2 befestigt. Dazu ist vorzugsweise am Halter 30 eine laterale Befestigungsstruktur vorgesehen.

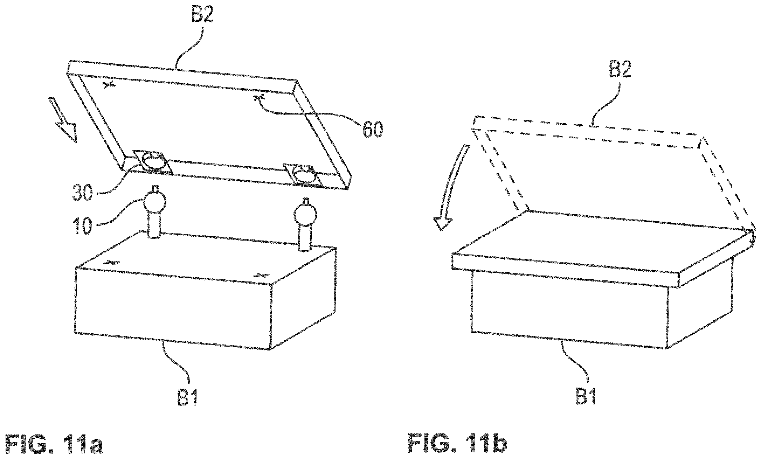

In einer bevorzugten Anwendung stellt das erste Bauteil B1 einen Motorblock oder eine Trägerstruktur in einem Fahrzeug dar. Das zweite Bauteil B2 wird durch eine Abdeckung, wie beispielsweise ein Motorcover oder dergleichen, gebildet. Mithilfe der erfindungsgemäßen Kupplung ist die Abdeckung B2 an der Trägerstruktur oder dem Motorblock B1 durch eine Steck-Schwenk-Bewegung befestigbar, wie es schematisch in Fig. 11 gezeigt ist. Dazu zeigt Fig. 11a ein bevorzugtes Einstecken des Kupplungsbolzens 10 in den Halter 30, in dem das erste B1 und das zweite Bauteil B2 bzw. der Kupplungsbolzen 10 und der Halter 30 relativ aufeinander zu bewegt werden. Dieses bevorzugte Einstecken des Kupplungsbolzens 10 in den Halter 30, das auch als geradlinige Relativbewegung bezeichnet werden kann, führt zu einer Verbindungsvorbereitung zwischen den beiden Bauteilen B1, B2.

Nachdem der Kupplungsbolzen 10 in den Halter 30 eingesetzt worden ist, wird der Halter 30 relativ zum Kupplungsbolzen 10 oder das zweite Bauteil B2 relativ zum ersten Bauteil B1 verschwenkt (siehe Fig. 11b). Basierend auf dieser Steck-Schwenk-Bewegung zwischen dem Halter 30 und dem Kupplungsbolzen 10 entsteht eine formschlüssige Verbindung, die zerstörungsfrei nur über die Umkehrung der Schwenkbewegung und der geradlinigen Relativbewegung oder Steckbewegung gelöst werden kann. Sofern diese die Verbindung lösende Umkehrung der Steck-Schwenk-Bewegung vermieden wird, liegt eine versagensstabile Verbindung zwischen dem ersten B1 und dem zweiten Bauteil B2 vor.

Um nach Herstellung der Verbindung zwischen dem ersten B1 und dem zweiten Bauteil B2 die Umkehrung der Schwenkbewegung zu vermeiden, ist vorzugsweise eine Steckkupplung zwischen Bauteil B1 und Bauteil B2 vorgesehen. Derartige Steckkupplungen oder andere Verbindungen sind im Stand der Technik bekannt. Wird vorzugsweise ein Kugelbolzen mit Steckkupplung eingesetzt, ist es bevorzugt, diese einander gegenüberliegend in einem von der erfindungsgemäßen Kupplung beabstandeten Bereich der Bauteile B1, B2 anzuordnen. Bevorzugte Positionen sind in Fig. 11a durch Kreuze schematisch angedeutet. Sobald die zusätzliche Verbindung, vorzugsweise durch zusätzliche Steckkupplungen, zwischen den Bauteilen B1, B2 hergestellt ist, wird dadurch eine lösende Schwenkbewegung in entgegengesetzter Richtung als in Fig. 11b gezeigt, verhindert.

Die Stabilität und mechanische Belastbarkeit der Kupplung ist unter anderem durch die Materialeigenschaften des Kupplungsbolzens 10 und des Halters 30 bestimmt. Daher besteht der Kupplungsbolzen 10 vorzugsweise aus Metall oder Keramik oder einem stabilen Kunststoff mit oder ohne Faserverstärkung oder aus einer Kombination dieser Materialien. Der Halter 30 besteht vorzugsweise aus einem stabilen, bevorzugt federnden, Kunststoff mit oder ohne Faserverstärkung oder einem Metall oder aus einer Kombination davon.

Eine bevorzugte Ausführungsform des Kupplungsbolzens 10 ist in Fig. 2 gezeigt. Der Kupplungsbolzen 10 wird über das Befestigungsende 12 mit dem ersten Bauteil B1 verbunden. Zu diesem Zweck umfasst das Befestigungsende 12 ein Gewinde, eine Rastverbindung, einen Klebdom oder eine andere bekannte Konstruktion zur verlässlichen Anbindung an das erste Bauteil B1. Gemäß Fig. 2 umfasst das Befestigungsende 12 bevorzugt ein Außengewinde, das mithilfe eines Sechskantprofils 13 in eine Bauteilöffnung (nicht gezeigt) eingeschraubt wird.

Des Weiteren umfasst die längliche Konstruktion des Kupplungsbolzens 10 einen Stützabschnitt 14. Nachdem die Verbindung zum Halter 30 hergestellt worden ist, stützen sich der Halter 30 und der Kupplungsbolzen 10 über den Stützabschnitt aneinander ab. Darüber werden mechanische Belastungen zwischen den Bauteilen B1, B2 abgetragen. In seiner Form an den Stützbereich 14 angepasst umfasst der Halter 30 zu diesem Zweck vorzugsweise einen Anlagebereich 40, der an einer dem Kupplungsbolzen zugewandten Mantelfläche 44 des Halters 30 ausgebildet ist. Die Bezeichnung Mantelfläche 44 folgt aus der Formgebung des Anlagebereichs 40, da diese Mantelfläche 44 zumindest teilweise den Stützabschnitt 14 umgibt.

Gemäß der gezeigten bevorzugten Ausführungsform in Fig. 2 ist der Stützabschnitt 14 kugelförmig ausgebildet. Der dazu passende Anlagebereich 40 ist ähnlich einer Kugelpfanne oder Kalotte, also annähernd komplementär zum kugelförmigen Stützabschnitt 14, geformt. Es ist ebenfalls bevorzugt, den Stützabschnitt 14 zylindrisch, konisch, elliptisch oder gewölbt auszubilden. Dabei wird vorzugsweise die dem Anlagebereich 40 zugewandte Fläche des Stützabschnitts 14 stetig ausgeformt, um ein Gleiten und/oder Abstützen des Anlagebereichs 40 auf dem Stützabschnitt 14 zu gewährleisten. Daher ist es beispielsweise bevorzugt, wenn der Stützabschnitt 14 zylindrisch ausgebildet ist, dass eine Zylinderlängsachse quer zur Längsachse des Kupplungsbolzens 10 angeordnet ist.

An den Stützabschnitt 14 schließt sich ein Steg 16 an. Der Steg 16 verbindet den Stützabschnitt 14 und einen Haltekopf 18. Der Steg 16 hat vorzugsweise eine runde Außenkontur, obwohl er in gleicher Weise eckig ausgebildet sein kann. Im Vergleich zum Stützabschnitt 14 und zum Haltekern 18 ist der Steg 16 gemessen quer zur Längsachse des Kupplungsbolzens 10 dünner, also verjüngt, ausgebildet. Somit ragen der Haltekopf und der Stützabschnitt 14 in radialer oder lateraler Richtung über den Querschnitt des Stegs 16 hinaus.

In seiner Dicke oder seinem Querschnitt ist der Steg 16 an ein Schlüsselloch 32 in der Mantelfläche 44 des Halters 30 angepasst. Das Schlüsselloch 32 besteht aus einem im Durchmesser im Vergleich zum Haltekopf 18 größeren oder breiteren Einsetzabschnitt 36, der in eine Verriegelungsnut 38 übergeht. Die Verriegelungsnut 38 ist geringfügig breiter als der Steg 16, sodass der Steg 16 in die Verriegelungsnut 38 aufgenommen werden kann. In der Verriegelungsnut 38 wird der Steg 16 formschlüssig gehalten. Der Haltekopf 18 und der Stützabschnitt 14 erstrecken sich in radialer oder lateraler Richtung über die Breite der Verriegelungsnut 38 hinaus. Daher ist der Steg 16 nicht in axialer Richtung des Kupplungsbolzens 10 aus der Verriegelungsnut 38 lösbar.

Weiterhin bevorzugt besitzt der Steg 16 eine axiale Länge, die durch den angrenzenden Haltekopf 18 und den angrenzenden Stützabschnitt 14 definiert ist. Vorzugsweise entspricht die Länge des Stegs 16 der Dicke der Mantelfläche 44 am geschlossenen Ende der Verriegelungsnut 38.

Die definierte Länge des Stegs 16 dient einem Verriegeln des Kupplungsbolzens 10 im Schlüsselloch 32. Sobald der Kupplungsbolzen 10 relativ zum Halter 30 verschwenkt worden ist, wird oder ist der Steg 16 am geschlossenen Ende der Verriegelungsnut 38 angeordnet. In Abhängigkeit von der Länge der Verriegelungsnut 38 ist der Steg 16 bereits nach dem Verschwenken am Ende der Verriegelungsnut 38 angeordnet. Es ist ebenfalls bevorzugt, dass bei einer längeren Verriegelungsnut 38 nach dem Verschwenken noch ein lineares Versetzen des Stegs 16 zum Ende der Verriegelungsnut 38 erfolgen muss. In dieser Position wird vorzugsweise die Mantelfläche 44 zwischen einer dem Stützabschnitt zugewandten Unterseite 17 des Haltekopfs 18 und dem Stützabschnitt 14 gehalten. In Abhängigkeit von der Stärke und/oder der Formgebung der Mantelfläche 44 wird die Mantelfläche 44 in dieser Position bevorzugt geklemmt. Somit bilden der Stützabschnitt 14 und die Unterseite 17 jeweils einen Hinterschnitt gegen ein Lösen des Stegs 16 in axialer Richtung aus der Verriegelungsnut 38.

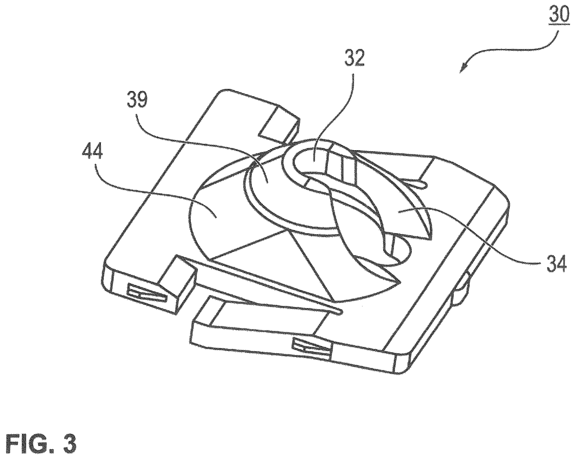

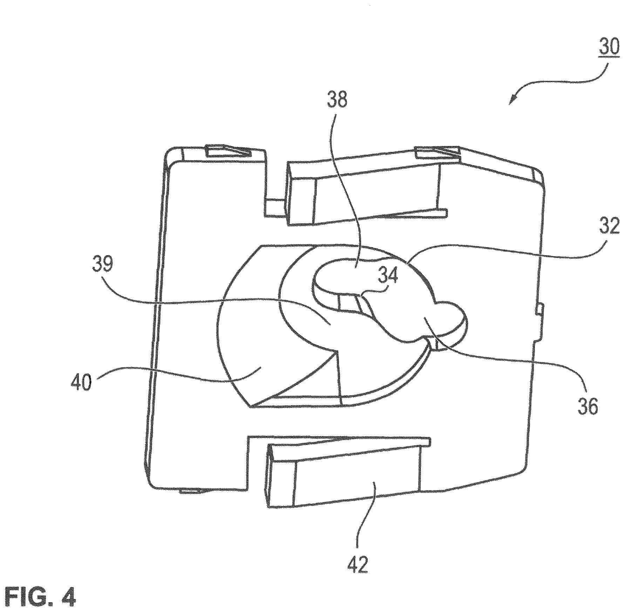

In den Figuren 3 und 4 ist bevorzugt die in ihrer Form an den Stützabschnitt 14 angepasste Mantelfläche 44 gezeigt. Die dem Stützabschnitt 14 zugewandte Seite der Mantelfläche 44 bildet den Anlagebereich 40. Man kann erkennen, dass das Schlüsselloch 32 aus Einsetzabschnitt 36 und Verriegelungsnut 38 aus der Mantelfläche 44 ausgeschnitten ist. Da die Mantelfläche 44 nicht in einer Ebene verläuft, schließt der Rand 34 des Schlüssellochs 32 eine nicht-ebene Fläche ein. Entsprechend verläuft auch bzw. liegt das Schlüsselloch 32 nicht in einer Ebene. Dies hat zur Folge, dass ein Einsetzen und Verriegeln des Kupplungsbolzens 10 im Schlüsselloch 32 nicht allein durch eine geradlinige Bewegung realisierbar ist. Vielmehr ist es erforderlich, dass der Kupplungsbolzen 10 nach einem linearen Einführen oder Einstecken in den Einsetzabschnitt 36 relativ zum Schlüsselloch 32 verschwenkt wird. Daher bewegen sich der Haltekopf 18 und der Steg 16 bevorzugt auf einem gedachten kreisbogenähnlichen Segment, um am geschlossenen Ende der Verriegelungsnut 38 verriegelt zu werden.

Die Mantelfläche 44 des Halters 30 und speziell die radial innen liegende Anlagefläche 40 sind zweistufig ausgebildet. Dies gewährleistet das Klemmen oder einen Presssitz des Halters 30 zwischen dem Haltekopf 18 und dem Stützabschnitt 14.

Zu diesem Zweck weist die radial innen liegende Anlagefläche 40 in ihrer Formgebung zwei unterschiedliche Bereiche auf. Bezogen auf eine Längsachse des in der Verriegelungsnut 38 anordenbaren Kupplungsbolzens 10 sind die zwei unterschiedlichen Bereiche in Form eines ersten 39 und eines zweiten Flächensegments 40a axial hintereinander angeordnet. Daraus ergibt sich eine Zweistufigkeit der Anlagefläche 40, da sich diese nicht gleichmäßig fortsetzt.

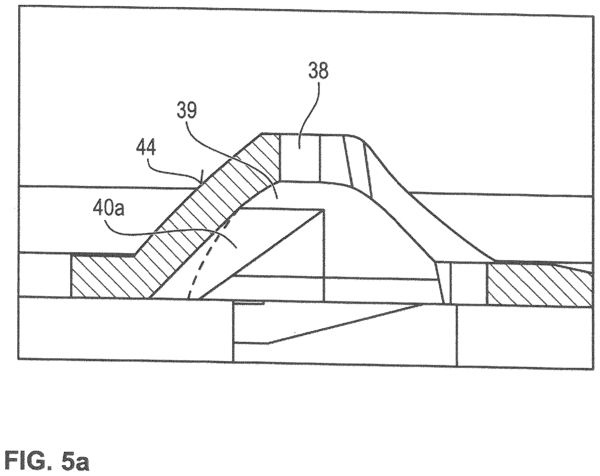

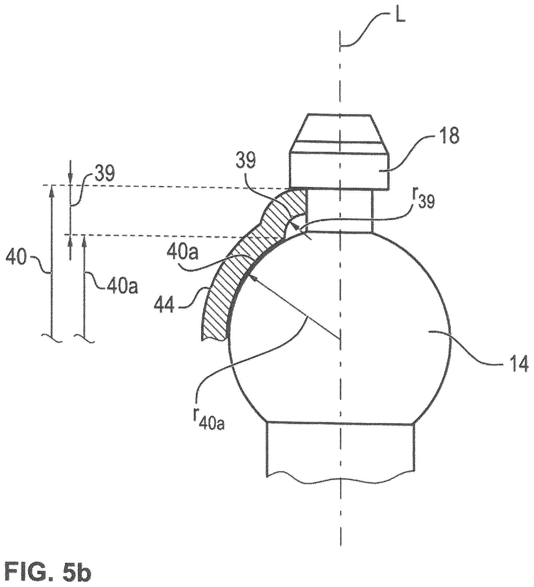

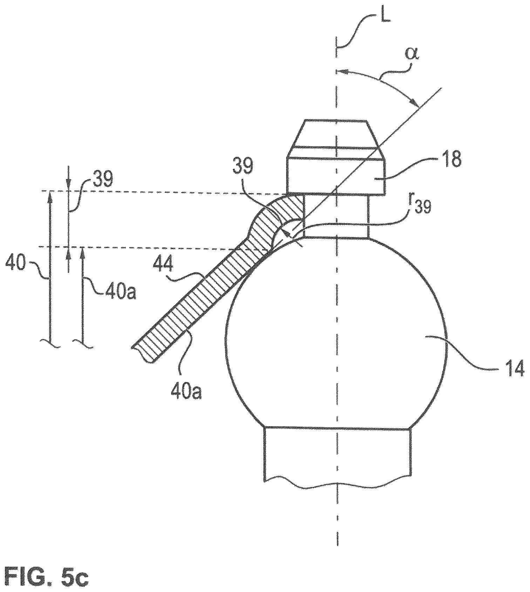

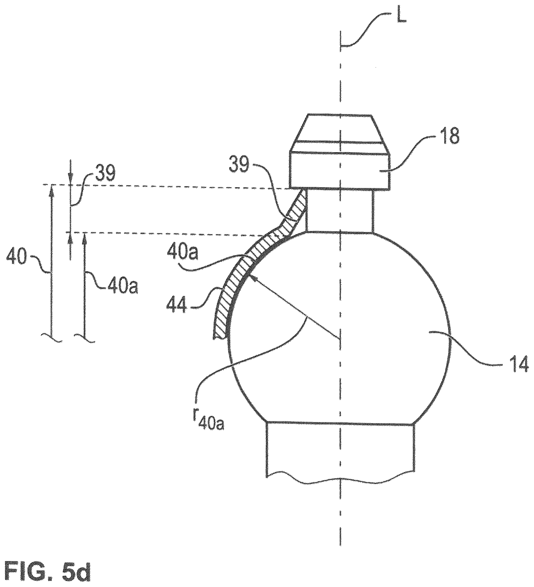

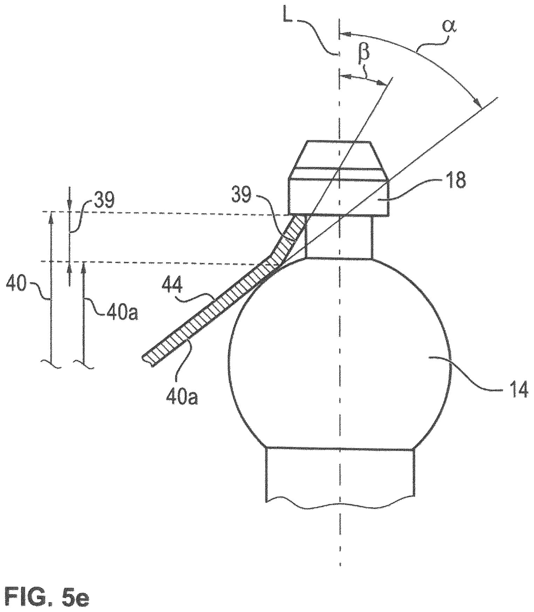

Gemäß unterschiedlicher Ausgestaltungen des Halters 30, die in den Figuren 5a - e veranschaulicht sind, sind das erste und das zweite radial innen liegende Flächensegment 39, 40a bezogen auf ihre Form gleich oder unterschiedlich ausgebildet. Gemäß unterschiedlicher Ausführungsformen vorliegender Erfindung sind das erste 39 und das zweite Flächensegment 40a kugelförmig und kugelförmig (siehe Fig. 5a, b), kugelförmig und konisch (siehe Fig. 5c), konisch und kugelförmig (siehe Fig. 5d) oder konisch und konisch (siehe Fig. 5e) geformt. Es versteht sich, dass weitere Abstufungen in den Flächensegmenten 39, 40a angeordnet sein können. Zudem ist es bevorzugt, den Stützabschnitt 14 als ein Polyeder, eine zylindrische Walze quer zur Längsachse L des Kupplungsbolzens 10 oder in einer anderer Formgestaltung vorzusehen.

Wie man anhand der schematisch dargestellten bevorzugten Ausführungsformen in den Figuren 5a - e erkennen kann, bildet der Bereich mit dem ersten Flächensegment 39 eine hutförmige Ausbuchtung bezogen auf das zweite Flächensegment 40a bzw. dessen Mantelfläche 44. Diese hutförmige Ausbuchtung ragt in radialer Richtung über den Außendurchmesser der Mantelfläche 44 hinaus. Die radiale Erstreckung der Ausbuchtung mit dem radial innen angeordneten ersten Flächensegment 39 ist größer als die Länge des Stegs 16. Da die Verriegelungsnut 38 vorzugsweise in der Ausbuchtung endet, ist der Halter 30 nur durch einen Presssitz im Bereich der Ausbuchtung zwischen Haltekopf 18 und Stützabschnitt 14 verriegelbar. In diesem Presssitz wird die Ausbuchtung mit dem radial innen liegenden ersten Flächensegment 39 in Längsrichtung L des Kupplungsbolzens 10 komprimiert. Dadurch wird die Ausbuchtung zwischen dem Hinterschnitt des Haltekopfs 18 und des Stützabschnitts 14 federnd geklemmt.

Um diesen Presssitz zu realisieren, der einen verlässlichen Halt des Kupplungsbolzens 10 im Halter 30 unterstützt, sind die Flächensegmente 39, 40a unterschiedlich oder ähnlich konfigurierbar. Gemäß einer Ausführungsform, die in Fig. 5b gezeigt ist, sind das erste 39 und das zweite Flächensegment 40a kugelförmig ausgebildet. Zur Realisierung der Ausbuchtung und des Presssitzes ist der Innenradius r₃₉ des ersten Flächensegments 39 kleiner als ein Innenradius r₄₀ₐ des zweiten Flächensegments 40a. Bevorzugt ist der Stützabschnitt 14 des Kupplungsbolzens 10 als Kugel ausgeformt. Weiterhin bevorzugt weist das zweite Flächensegment 40a den gleichen oder einen ähnlichen Radius r₄₀ₐ wie der Stützabschnitt 14 auf.

Gemäß der bevorzugten Ausführungsform in Fig. 5c ist das zweite Flächensegment 40a konisch ausgebildet. Das erste Flächensegment 39 ist kugelförmig ausgebildet. Ein Konuswinkel 2α und der Innenradius r₃₉ sind derart gewählt, dass das erste Flächensegment 39 die radiale Ausbuchtung in Richtung der Längsachse L des verriegelt anordenbaren Kupplungsbolzens 10 bildet. Während sich das konisch geformte Flächensegment 40a am Stützabschnitt 14 abstützt, wird die Ausbuchtung bzw. das erste Flächensegment 39 unter den Hinterschnitt des Haltekopfs 18 gezwängt. Dadurch wird der oben diskutierte Presssitz gewährleistet.

Gemäß der in Fig. 5d gezeigten bevorzugten Ausführungsform ist das erste Flächensegment 39 konisch ausgebildet. Es bildet ebenfalls eine radiale Ausbuchtung, die aus der Mantelfläche 44 vorsteht. Zu diesem Zweck ist der Konuswinkel der Ausbuchtung bzw. des ersten Flächensegments 39 derart gewählt, dass die Ausbuchtung aus der Mantelfläche 44 geprägt durch den Innenradius r₄₀ₐ des zweiten Flächensegments radial vorsteht. Entsprechend ist das zweite Flächensegment 40a kugelförmig mit dem Innenradius r₄₀ₐ ausgebildet. Vorzugsweise entspricht der Innenradius r₄₀ₐ dem Radius des kugelähnlichen Stützabschnitts 14.

Eine weitere bevorzugte Ausführungsform zeigt Fig. 5e. Hier sind das erste 39 und das zweite Flächensegment 40a konisch ausgebildet. Zur Realisierung der Ausbuchtung durch das erste Flächensegment 39 ist ein Konuswinkel 2β des ersten Flächensegments 39 kleiner als der Konuswinkel 2α des zweiten Flächensegments 40a. Damit steht die Ausbuchtung in radialer Richtung bezogen auf den Stützabschnitt 14 derart vor, dass ein Presssitz des Halters 30 zwischen dem Haltekopf 18 und dem Stützabschnitt 14 gewährleistet ist.

Speziell der radial innen liegende Anlagebereich 40 ist nicht komplementär zum Stützabschnitt 14 ausgebildet. In der bevorzugten Ausführungsform ist daher der Anlagebereich 40 gerade nicht als Kugelpfanne komplementär zum Stützabschnitt 14 geformt, sondern ist zumindest zweistufig in ein erstes Kugelflächensegment 39 und ein zweites Kugelflächensegment 40a unterteilt. Es versteht sich, dass mehr als zwei Kugelflächensegmente im Anlagebereich 40 vorgesehen sein können. Zudem ist es bevorzugt, den Anlagebereich 40 nicht kugelförmig auszugestalten.

Durch die oben beschriebenen bevorzugten Ausgestaltungen hat die Mantelfläche 44 im Bereich des geschlossenen Endes der Verriegelungsnut 38 eine über eine Stützfläche hinausgehende radiale Ausdehnung der Ausbuchtung. Gleichzeitig stützt sich aber der Anlagebereich 40 an dem Stützabschnitt 14 ab. Sobald sich die Unterseite 17 des Haltekopfs 18 am Rand der Verriegelungsnut 38 in axialer Richtung abstützt, wird der Bereich 39 und somit bevorzugt die Mantelfläche 44 zwischen der Unterseite 17 des Haltekopfs 18 und dem Stützabschnitt 14 verspannt bzw. federnd eingeklemmt. Dies unterstützt das Verriegeln des Kupplungsbolzens 10 im Halter 30 (siehe auch Fig. 9).

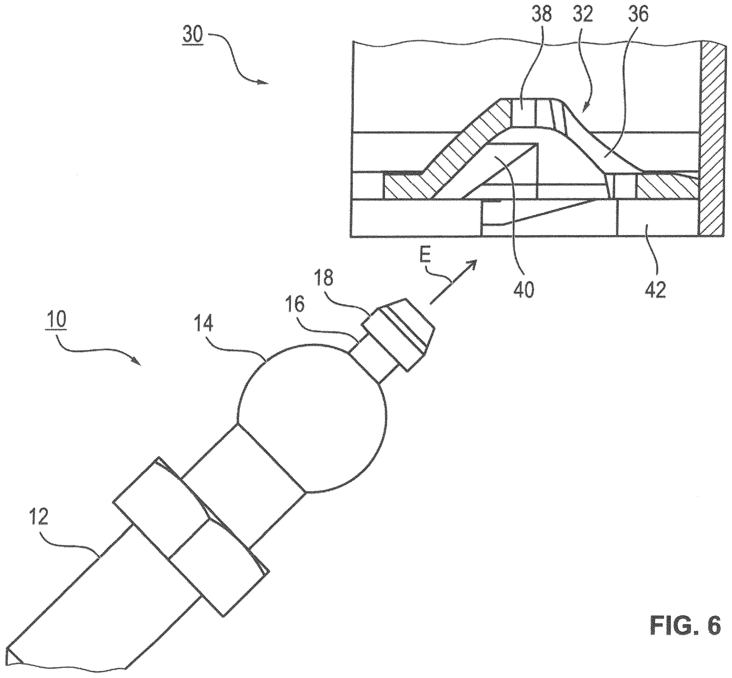

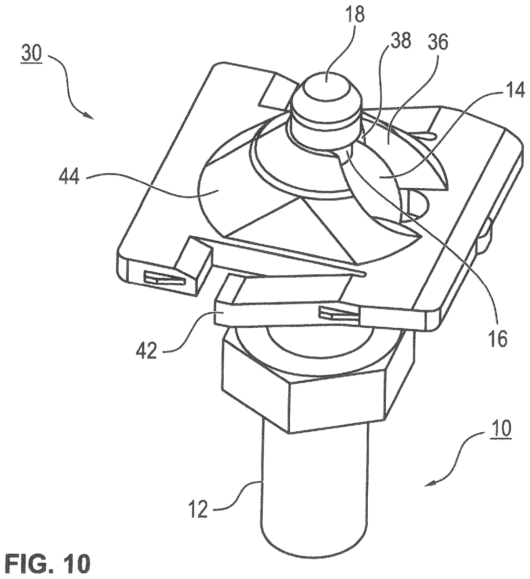

Der Halter 30 umfasst zudem eine Befestigungsstruktur bevorzugt an zwei einander gegenüberliegenden Seitenflächen. Die Befestigungsstruktur dient der klemmenden, klebenden, verrastenden oder anderweitigen geeigneten Befestigung des Halters 30 am zweiten Bauteil B2. Gemäß Fig. 10 sind vorzugsweise Befestigungsstege 42 vorgesehen, die in einer daran angepassten Nut (siehe Fig. 6 bis 8) eingreifen. In dieser Nut sind die Befestigungsstege 42 verspannt, verrastet, verklebt oder ähnliches.

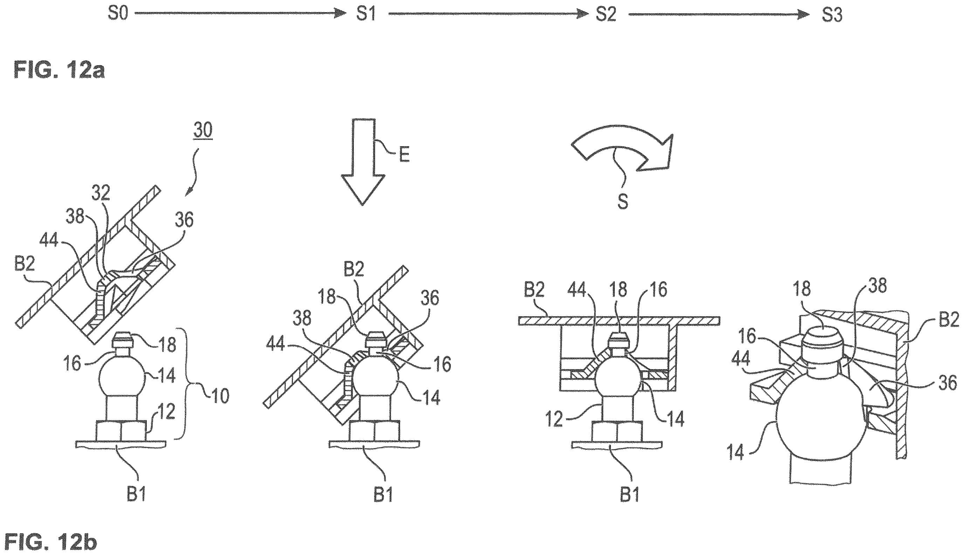

Eine bevorzugte Ausführungsform des Verbindungsverfahrens ist zusammenfassend in Fig. 12 dargestellt. Die einzelnen Sequenzen aus Fig. 12b sind vergrößert in den Fig. 6 bis 8 wiedergegeben.

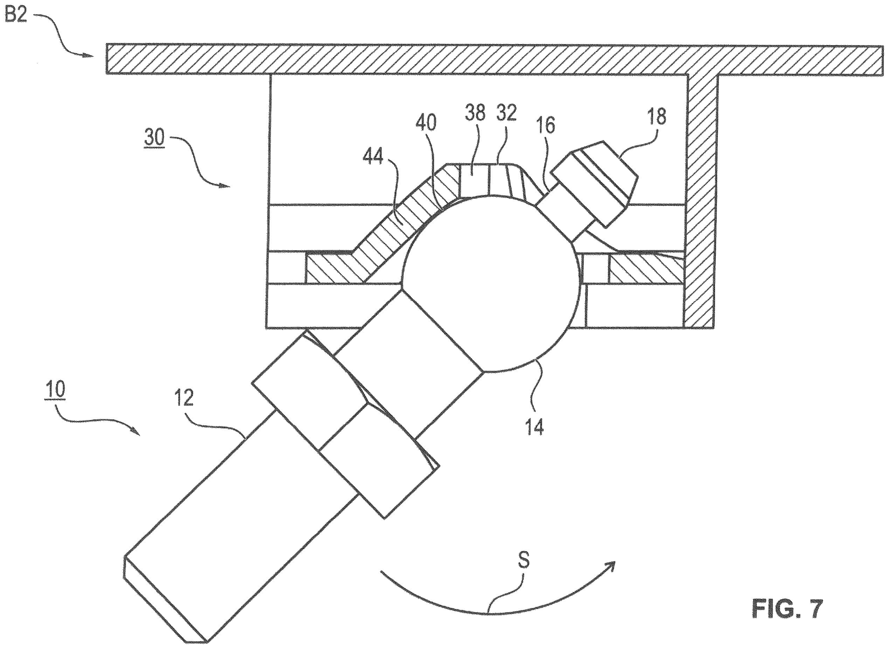

Um eine Verbindung zwischen dem ersten Bauteil B1 mit Kupplungsbolzen 10 und dem zweiten Bauteil B2 mit Halter 30 herzustellen, wird zunächst der Kupplungsbolzen 10 mithilfe einer geradlinigen Bewegung in axialer Richtung des Kupplungsbolzens 10 in den Einsetzabschnitt 36 des Schlüssellochs 32 eingesetzt (siehe Pfeil E in Fig. 6, Schritt S1). Vorzugsweise wird der Kupplungsbolzen 10 soweit eingesetzt, bis der Stützabschnitt 14 am Halter 30 anliegt und sich der Haltekopf 18 über den Halter 30 hinaus erstreckt (siehe Fig. 6 und 7). Entsprechend hat der Einsetzabschnitt 36 eine größere seitliche bzw. radiale Ausdehnung als der Querschnitt des Haltekopfs 18.

Das Einsetzen ist eine Relativbewegung zwischen dem Kupplungsbolzen 10 und dem Halter 30. Daher kann sich sowohl der Kupplungsbolzen 10 oder der Halter 30 bewegen, während der andere Teil ruht, oder der Kupplungsbolzen 10 und der Halter 30 bewegen sich gleichzeitig. Während Fig. 6 bevorzugt die Bewegung des Kupplungsbolzens 10 in das Schlüsselloch 32 zeigt, wird in Fig. 12b das zweite Bauteil B2 mit Halter 30 auf den Kupplungsbolzen 10 aufgesetzt.

Nachfolgend wird bevorzugt der Kupplungsbolzen 10 derart verschwenkt (Schritt S2), dass der Haltekopf 18 am geschlossenen Ende der Verriegelungsnut 38 angeordnet ist. Vorzugsweise erfolgt das Verschwenken S gemäß Fig. 7 und gemäß Fig. 12b um den Stützabschnitt 14 als Drehpunkt. Denn vorzugsweise ist der Stützabschnitt 14 als Kugel ausgebildet, was die Schwenkbewegung unterstützt. Während der Schwenkbewegung wird vorzugsweise der Halter 30 in einen Presssitz zwischen dem Haltekopf 18 und dem Stützabschnitt 18 überführt. Der Presssitz entsteht im Wesentlichen durch die Kompression der Ausbuchtung im ersten Flächensegment 39, während sich das zweite Flächensegment 40 ganz oder teilweise am Stützabschnitt 14 abstützt.

Während des Abschlusses oder nach Beendigung der Schwenkbewegung des ersten B1 und des zweiten Bauteils B2 relativ zu einander werden vorzugsweise das erste und das zweite Bauteil B1, B2 zusätzlich mit einander verbunden. Diese Verbindung/Verbindungen wird/werden gemäß unterschiedlicher bevorzugter Ausführungsformen vorliegender Erfindung über mindestens eine Steckkupplung 60 (siehe Fig. 11), eine Verschraubung, einen Verriegelungsmechanismus, einen Verrastungsmechanismus oder eine andere lösbare Verbindung miteinander verbunden (Schritt S3).

Den obigen Verfahrensschritten ist das Befestigen des Kupplungsbolzens 10 und des Halters 30 an den Bauteilen B1, B2 vorgelagert (Schritt S0).

### Bezugszeichenliste

- B1, B2: Bauteil
- 10: Kupplungsbolzen
- 12: Befestigungsende
- 13: Sechskantprofil
- 14: Stützabschnitt
- 16: Steg
- 17: Unterseite des Haltekopfs
- 18: Haltekopf
- 30: Halter
- 32: Schlüsselloch
- 34: Rand
- 36: Einsetzabschnitt
- 38: Verriegelungsnut
- 39: erstes Flächensegment
- 40: Anlagebereich
- 40a: zweites Flächensegment
- 42: Befestigungssteg
- 44: Mantelfläche
- 60: Steckkupplung, Verschraubung, Verriegelungsmechanismus, Verrastungsmechanismus
- S1: Einstecken
- S2: Schwenken
- S3: Federvorspannen
- r₃₉, r₄₀ₐ: Innenradius

## Patentansprüche

1. Halter (30) einer Kupplung, der ein Schlüsselloch (32) und einen Anlagebereich (40) aufweist, in dem ein Rand (34) des Schlüssellochs (32) eine nichtebene Fläche einschließt, wobei
der Halter (30) über eine Befestigungsstruktur (42) an einem Bauteil (B2) befestigbar ist und der Anlagebereich (40) in Richtung einer Längsachse eines im Schlüsselloch verriegelt anordenbaren Kupplungsbolzens (10) zumindest zweistufig ausgebildet ist, sodass der Anlagebereich (40) zwischen einem Haltekopf (18) und einem Stützabschnitt (14) des Kupplungsbolzens (10) mechanisch verspannbar ist.

2. Halter (30) gemäß Anspruch 1, in dem der Anlagebereich (40) aus mindestens einem ersten (39) und einem zweiten Flächensegment (40) besteht, die symmetrisch um den im Schlüsselloch verriegelt anordenbaren Kupplungsbolzen (10) angeordnet sind

3. Kupplung, mit der ein erstes (B1) und ein zweites Bauteil (B2) miteinander verbindbar sind, die aufweist:
a. einen Kupplungsbolzen (10), der ein Befestigungsende (12), einen Haltekopf (18) und einen dazwischen angeordneten Stützabschnitt (14) umfasst, indem der Haltekopf (18) und der Stützabschnitt (14) über einen gegenüber dem Haltekopf (18) und dem Stützabschnitt verjüngten Steg (16) miteinander verbunden sind und das Befestigungsende (12) am ersten Bauteil (B1) befestigbar ist, **dadurch gekennzeichnet, dass** die Kupplung weiterhin umfasst:
b. einen Halter (30) gemäß einem der Patentansprüche 1 oder 2, der über die Befestigungsstruktur (42) an dem zweiten Bauteil (B2) befestigbar ist, wobei
c. der Kupplungsbolzen (10) über eine Steck-Schwenk-Bewegung in dem Schlüsselloch (32) formschlüssig verriegelbar ist und
d. der Haltekopf (18) und der mit ihm über den verjüngten Steg (16) verbundene Stützabschnitt (14) jeweils einen Hinterschnitt in Längsrichtung des Kupplungsbolzens (10) bilden, sodass der Halter (30) in entgegengesetzten Richtungen am Haltekopf (18) und dem Stützabschnitt (14) des verriegelten Kupplungsbolzens (10) abstützbar ist.

4. Kupplung gemäß Anspruch 3, in der das Schlüsselloch (32) einen Einsetzabschnitt (36) und eine Verriegelungsnut (38) umfasst, in dem der Einsetzabschnitt (36) einen Durchgangsbereich für den Haltekopf (18) des Kupplungsbolzens (10) bildet und eine Breite der Verriegelungsnut (38) geringer ist als ein Durchmesser des Haltekopfs (18) und größer als eine Dicke des verjüngten Stegs (16).

5. Kupplung gemäß Anspruch 3 oder 4, in der der Anlagebereich (40) des Halters (30) an die Form des Stützabschnitts (14) des Kupplungsbolzens (10) angepasst ist, sodass sich der Kupplungsbolzen (10) und der Halter (30) im verriegelten Zustand zumindest teilweise aneinander abstützen.

6. Kupplung gemäß Anspruch 5, in der der Anlagebereich (40) die Form einer Kugelpfanne aufweist, in dessen Mantelfläche das Schlüsselloch (32) ausgebildet ist.

7. Kupplung gemäß einem der vorhergehenden Ansprüche 3-6, in der der Halter (30) seitlich angeordnete Befestigungsstege (42) aufweist, mit denen der Halter (30) am zweiten Bauteil (B2), befestigbar, vorzugsweise verrastbar oder klemmbar, ist.

8. Kupplung gemäß einem der vorhergehenden Ansprüche 3-7, in der der Stützabschnitt (14) des Kugelbolzens (10) kugelförmig ausgebildet ist und der Haltekopf (18) mit dem verjüngten Steg (16) eine pilzförmige Struktur bildet.

9. Kupplung gemäß einem der Ansprüche 3-8, in der die Flächensegmente (39, 40) kugelförmig ausgebildet sind und ein Radius des ersten kugelförmigen Flächensegments (39) kleiner ist als ein Radius des zweiten kugelförmigen Flächensegments (40) und in der das erste kugelförmige Flächensegment (39) angrenzend an das Schlüsselloch (32) angeordnet ist.

10. Kupplung gemäß einem der Ansprüche 3-8, in der das erste Flächensegment (39) konisch oder kugelförmig und das zweite Flächensegment (40a) konisch oder kugelförmig ausgebildet sind, wobei bei zwei konischen Flächensegmenten ein Konuswinkel des ersten Flächensegments kleiner ist als ein Konuswinkel des zweiten Flächensegments (40a).

11. Kupplung gemäß einem der Ansprüche 3-8, in der das erste Flächensegment (39) kugelförmig ausgebildet ist mit einem Durchmesser, der kleiner ist als ein Durchmesser des Stützabschnitts (14), und in der das zweite Flächensegment (40a) kegelstumpfartig geformt ist, sodass der Stützabschnitt (14) durch das zweite Flächensegment (40a) tangential angreifbar ist.

12. Verfahren zum Verbinden eines ersten (B1) und eines zweiten Bauteils (B2) mithilfe einer Kupplung gemäß einem der Ansprüche 3 bis 11, bei dem
das erste Bauteil (B1) über ein Befestigungsende (12) mit einem Kupplungsbolzen (10) verbunden ist, der einen Haltekopf (18), einen Stützabschnitt (14) und einen dazwischen angeordneten verjüngten Steg (16) umfasst, und **dadurch gekennzeichnet, dass** das zweite Bauteil (B2) einen Halter (30) mit einem Schlüsselloch (32) und einem Anlagebereich (40) aufweist, in dem ein Rand (34) des Schlüssellochs (32) eine nicht-ebene Fläche einschließt, wobei das Verfahren die folgenden Schritte aufweist:
a. Einstecken (S1) des Haltekopfs (18) in einen Einsetzabschnitt (36) des Schlüssellochs (32), sodass der Stützabschnitt (14) am Halter (30) anliegt, und
b. Schwenken (S2) des Kupplungsbolzens (10) relativ zum Halter (30), sodass der verjüngte Steg (16) zwischen dem Haltekopf (18) und dem Stützabschnitt (14) zumindest formschlüssig in einer Verriegelungsnut (38) des Schlüssellochs (32) angeordnet ist.

13. Verfahren gemäß Anspruch 12, mit dem weiteren Schritt:
Federvorspannen (S3) des Stützabschnitts (14) des Kupplungsbolzens (10) gegen den Anlagebereich (40) des Halters (30), in dem der verjüngte Steg (16) in die Verriegelungsnut (38) eingeschwenkt wird.

14. Verfahren gemäß Anspruch 12 oder 13, wobei der Stützabschnitt (14) kugelförmig ausgebildet ist und in dem kugelpfannenähnlichen Anlagebereich (40) aufgenommen wird, sodass Kräfte zwischen dem Kupplungsbolzen (10) und dem Halter (30) zum Teil flächig übertragen werden.

15. Verfahren nach einem der Ansprüche 12 bis 14, mit dem weiteren Schritt:
Herstellen (S4) einer weiteren Verbindung zwischen dem ersten (B1) und dem zweiten Bauteil (B2) am Ende der Schwenkbewegung, vorzugsweise über eine Steckkupplung.

16. Ein erstes (B1) und ein zweites Bauteil (B2), die zumindest über eine Kupplung gemäß einem der Ansprüche 3 bis 11 miteinander verbunden sind.

## Claims

1. Holder (30) of a coupling, comprising a keyhole (32) and an abutting portion (40) in which an edge (34) of the keyhole (32) encloses a non-planar surface, wherein
the holder (30) is fastenable by means of a fastening structure (42) to a component (B2) and the abutting portion (40) is formed with at least two stages in the direction of a longitudinal axis of a coupling bolt (10), which is arrangeable in a locking manner in the keyhole, so that the abutting portion (40) is mechanically braceable between a holding head (18) and a supporting section (14) of the coupling bolt (10).

2. Holder (30) according to claim 1, in which the abutting portion (40) consists of at least a first (39) and a second areal segment (40), which are arranged symmetrically around the coupling bolt (10), which is lockingly arrangeable in the keyhole.

3. Coupling, with which a first (B1) and a second component (B2) are connectable to each other, comprising the following features:
a. a coupling bolt (10) comprising a fastening end (12), a holding head (18) and a supporting section (14) arranged therebetween, in which the holding head (18) and the supporting section (14) are connected to each other by means of a web (16) that is tapered with respect to the holding head (18) and the supporting section, and the fastening end (12) is fastenable at the first component (B 1), **characterized in that** the coupling furthermore comprises:
b. a holder (30) according to one of the claims 1 or 2, which is fastenable by means of the fastening structure (42) to the second component (B2), wherein
c. the coupling bolt (10) is lockable in a form-fit manner in the keyhole (32) by means of an inserting-pivoting-movement and
d. the holding head (18) and the supporting section (14) connected with it by means of the tapered web (16) each form an undercut in the longitudinal direction of the coupling bolt (10), so that the holder (30) is supportable in opposite directions at the holding head (18) and the supporting section (14) of the locked coupling bolt (10).

4. Coupling according to claim 3, in which the keyhole (32) comprises an inserting section (36) and a locking groove (38), in which the inserting section (36) forms a passage portion for the holding head (18) of the coupling bolt (10) and a width of the locking groove (38) is smaller than a diameter of the holding head (18) and larger than a thickness of the tapered web (16).

5. Coupling according to claim 3 or 4, in which the abutting portion (40) of the holder (30) is adapted to the form of the supporting section (14) of the coupling bolt (10) such that in the locked state, the coupling bolt (10) and the holder (30) at least partly rest against each other.

6. Coupling according to claim 5, in which the supporting section (40) has the form of a ball socket, in the lateral surface of which the keyhole (32) is formed.

7. Coupling according to one of the preceding claims 3-6, in which the holder (30) comprises laterally arranged fastening webs (42), by means of which the holder (30) is fastenable, preferably lockable or clampable, at the second component (B2).

8. Coupling according to one of the preceding claims 3-7, in which the supporting section (14) of the ball bolt (10) is formed ball-shaped and the holding head (18) forms a mushroom-shaped structure with the tapered web (16).

9. Coupling according to one of the claims 3-8, in which the areal segments (39, 40) are formed ball-shaped and a radius of the first ball-shaped areal segment (39) is smaller than a radius of the second ball-shaped areal segment (40) and in which the first ball-shaped areal segment (39) is arranged adjacent to the keyhole (32).

10. Coupling according to one of the claims 3-8, in which the first areal segment (39) is formed conically or ball-shaped and the second areal segment (40a) is formed conically or ball-shaped, wherein in case of two conical areal segments, a cone angle of the first areal segment is smaller than a cone angle of the second areal segment (40a).

11. Coupling according to one of the claims 3-8, in which the first areal segment (39) is formed ball-shaped having a diameter which is smaller than a diameter of the supporting section (14), and in which the second areal segment (40a) is formed truncated cone-like so that the supporting section (14) is tangentially engageable by the second areal segment (40a).

12. Method for connecting a first (B1) and a second component (B2) by means of a coupling according to one of the claims 3 to 11, in which
the first component (B1) is connected to a coupling bolt (10) by means of a fastening end (12), the coupling bolt (10) having a holding head (18), a supporting section (14) and a tapered web (16) arranged therebetween, and **characterized in that** the second component (B2) comprises a holder (30) having a keyhole (32) and an abutting portion (40), in which an edge (34) of the keyhole (32) encloses a non-planar surface, wherein the method comprises the following steps:
a. inserting (S1) the holding head (18) into an inserting section (36) of the keyhole (32) so that the supporting section (14) abuts the holder (30), and
b. pivoting (S2) the coupling bolt (10) relative to the holder (30) so that the tapered web (16) between the holding head (18) and the supporting section (14) is arranged at least in a form-fit manner in a locking groove (38) of the keyhole (32).

13. Method according to claim 12, having the further step:
spring pre-tensioning (S3) the supporting section (14) of the coupling bolt (10) against the abutting portion (40) of the holder (30) by pivoting the tapered web (16) into the locking groove (38).

14. Method according to claim 12 or 13, wherein the supporting section (14) is formed ball-shaped and is received in the ball socket-like abutting portion (40) so that forces between the coupling bolt (10) and the holder (30) are transferred partly areally.

15. Method according to one of the claims 12 to 14, comprising the further step:
establishing (S4) a further connection between the first (B1) and the second component (B2) at the end of the pivoting movement, preferably by means of a plug-in coupling.

16. A first (B1) and a second component (B2) which are connected to each other by means of at least one coupling according to one of the claims 3 to 11.

## Revendications

1. Dispositif de retenue (30) d'un couplage, lequel présente un trou de serrure (32) et une zone de contact (40), dans lequel un bord (34) du trou de serrure (32) inclut une surface non plane, dans lequel
le dispositif de retenue (30) peut être fixé à un composant (B2) par le biais d'une structure de fixation (42) et la zone de contact (40) est réalisée en au moins deux niveaux dans la direction d'un axe longitudinal d'une tige de couplage (10) apte à être disposée de façon verrouillée dans le trou de serrure, de sorte que la zone de contact (40) peut être serrée mécaniquement entre une tête de retenue (18) et une section d'appui (14) de la tige de couplage (10).

2. Dispositif de retenue (30) selon la revendication 1, dans lequel la zone de contact (40) est constituée d'au moins un premier (39) et un deuxième segment de surface (40), lesquels sont disposés symétriquement autour de la tige de couplage (10) apte à être disposée de façon verrouillée dans le trou de serrure.

3. Couplage permettant de relier un premier (B1) et un deuxième composant (B2) entre eux, lequel présente :
a. une tige de couplage (10) comportant une extrémité de fixation (12), une tête de retenue (18) et une section d'appui (14) disposée entre celles-ci, dans laquelle la tête de retenue (18) et la section d'appui (14) sont reliées entre elles par le biais d'une âme (16) amincie par rapport à la tête de retenue (18) et à la section d'appui et l'extrémité de fixation (12) peut être fixée au premier composant (B1), **caractérisé en ce que** le couplage comporte en outre :
b. un dispositif de retenue (30) selon l'une des revendications 1 ou 2, lequel peut être fixé au deuxième composant (B2) par le biais de la structure de fixation (42), dans lequel
c. la tige de couplage (10) peut être verrouillée par complémentarité de forme dans le trou de serrure (32) par un mouvement d'enfichagepivotement et
d. la tête de retenue (18) et la section d'appui (14) reliée à celle-ci par le biais de l'âme amincie (16) forment respectivement un dégagement dans le sens longitudinal de la tige de couplage (10), de sorte que le dispositif de retenue (30) peut s'appuyer dans des directions opposées sur la tête de retenue (18) et la section d'appui (14) de la tige de couplage (10) verrouillée.

4. Couplage selon la revendication 3, dans lequel le trou de serrure (32) comporte une section d'insertion (36) et une rainure de verrouillage (38), dans lequel la section d'insertion (36) forme une zone de passage pour la tête de retenue (18) de la tige de couplage (10) et une largeur de la rainure de verrouillage (38) est inférieure à un diamètre de la tête de retenue (18) et supérieure à une épaisseur de l'âme amincie (16).

5. Couplage selon la revendication 3 ou 4, dans lequel la zone de contact (40) du dispositif de retenue (30) est adaptée à la forme de la section d'appui (14) de la tige de couplage (10), de sorte que la tige de couplage (10) et le dispositif de retenue (30) s'appuient au moins partiellement l'un sur l'autre dans l'état verrouillé.

6. Couplage selon la revendication 5, dans lequel la zone de contact (40) présente la forme d'un coussinet sphérique, dans la surface d'enveloppe duquel est réalisé le trou de serrure (32).

7. Couplage selon l'une des revendications 3 à 6, dans lequel le dispositif de retenue (30) présente des âmes de fixation (42) disposées latéralement, avec lesquelles le dispositif de retenue (30) peut être fixé, de préférence encliqueté ou serré, sur le deuxième composant (B2).

8. Couplage selon l'une des revendications précédentes 3 à 7, dans lequel la section d'appui (14) de la tige à rotule (10) est réalisée en forme de sphère et la tête de retenue (18) forme une structure en champignon avec l'âme amincie (16).

9. Couplage selon l'une des revendications 3 à 8, dans lequel les segments de surface (39, 40) sont réalisés en forme de sphère et un rayon du premier segment de surface sphérique (39) est inférieur à un rayon du deuxième segment de surface sphérique (40) et dans lequel le premier segment de surface sphérique (39) est disposé de façon adjacente au trou de serrure (32).

10. Couplage selon l'une des revendications 3 à 8, dans lequel le premier segment de surface (39) est réalisé de façon conique ou en forme de sphère et le deuxième segment de surface (40a) est réalisé de façon conique ou en forme de sphère, dans lequel un angle de cône du premier segment de surface est inférieur à un angle de cône du deuxième segment de surface (40a) dans le cas de deux segments de surface coniques.

11. Couplage selon l'une des revendications 3 à 8, dans lequel le premier segment de surface (39) est réalisé en forme de sphère, avec un diamètre inférieur à un diamètre de la section d'appui (14), et dans lequel le deuxième segment de surface (40a) est formé comme un cône tronqué, de sorte que la section d'appui (14) peut être engagée tangentiellement par le deuxième segment de surface (40a).

12. Procédé de liaison d'un premier (B1) et d'un deuxième composant (B2) à l'aide d'un couplage selon l'une des revendications 3 à 11, dans lequel
le premier composant (B1) est relié par le biais d'une extrémité de fixation (12) à une tige de couplage (10), laquelle présente une tête de retenue (18), une section d'appui (14) et une âme amincie (16) disposée entre celles-ci, **caractérisé en ce que** le deuxième composant (B2) présente un dispositif de retenue (30) comprenant un trou de serrure (32) et une zone de contact (40), dans lequel un bord (34) du trou de serrure (32) inclut une surface non plane, le procédé présentant les étapes suivantes :
a. enfichage (S1) de la tête de retenue (18) dans une section d'insertion (36) du trou de serrure (32), de telle façon que la section d'appui (14) s'applique sur le dispositif de retenue (30), et
b. pivotement (S2) de la tige de couplage (10) par rapport au dispositif de retenue (30), de telle façon que l'âme amincie (16) est disposée au moins par complémentarité de forme dans une rainure de verrouillage (38) du trou de serrure (32) entre la tête de retenue (18) et la section d'appui (14).

13. Procédé selon la revendication 12, comprenant l'étape supplémentaire suivante :
précontrainte par ressort (S3) de la section d'appui (14) de la tige de couplage (10) contre la zone de contact (40) du dispositif de retenue (30), l'âme amincie (16) étant pivotée dans la rainure de verrouillage (38).

14. Procédé selon la revendication 12 ou 13, dans lequel la section d'appui (14) est réalisée en forme de sphère et reçue dans la zone de contact (40) semblable à un coussinet sphérique, de sorte que des forces sont transmises en partie de façon surfacique entre la tige de couplage (10) et le dispositif de retenue (30).

15. Procédé selon l'une des revendications 12 à 14, comprenant l'étape supplémentaire suivante :
fabrication (S4) d'une liaison supplémentaire entre le premier (B1) et le deuxième composant (B2) à la fin du mouvement de pivotement, de préférence par le biais d'un couplage à enfichage.

16. Premier (B1) et deuxième composant (B2), lesquels sont reliés entre eux au moins par un couplage selon l'une des revendications 3 à 11.
